Europäisches Patentamt

European Patent Office

Office européen des brevets

(11) Publication number: **0 293 263 B1**

(12) **EUROPEAN PATENT SPECIFICATION**

(45) Date of publication of patent specification: **26.02.92**  (51) Int. Cl.⁵: **D02G 3/48**, D07B 1/06, B60C 9/00

(21) Application number: **88304895.1**

(22) Date of filing: **27.05.88**

(54) Rubber-reinforcing cords and radial-ply tires using the same.

(30) Priority: **28.05.87 JP 129921/87**
**17.06.87 JP 149158/87**
**27.10.87 JP 269483/87**

(43) Date of publication of application:
**30.11.88 Bulletin 88/48**

(45) Publication of the grant of the patent:
**26.02.92 Bulletin 92/09**

(84) Designated Contracting States:
**DE FR GB IT**

(56) References cited:
WO-A-85/02210          DE-A- 2 701 025
DE-A- 2 729 172          DE-A- 3 410 703
DE-B- 2 218 402          FR-A- 2 338 152
GB-A- 1 336 213          GB-A- 1 486 746

(73) Proprietor: **THE YOKOHAMA RUBBER CO., LTD.**
**36-11, Shinbashi 5-chome Minato-ku Tokyo, 105(JP)**

(72) Inventor: **Imamiya, Susumu**
**15-1-4-303, Sumiredaira**
**Hiratsuka-shi, Kanagawa-ken(JP)**
Inventor: **Takahashi, Shuji**
**203-22-101, Takamura**
**Hiratsuka-shi, Kanagawa-ken(JP)**
Inventor: **Suzuki, Yasuo**
**3-29-7, Nakahara**
**Hiratsuka-shi, Kanagawa-ken(JP)**
Inventor: **Nagumo, Tadanobu**
**123-2-1-508, Tohgahara**
**Hiratsuka-shi, Kanagawa-ken(JP)**
Inventor: **Kato, Hisao**
**1-28-1, Minamihara**
**Hiratsuka-shi, Kanagawa-ken(JP)**

(74) Representative: **White, Martin David et al**
**MARKS & CLERK 57/60 Lincoln's Inn Fields London WC2A 3LS(GB)**

## Description

This invention relates to composite cords suitable for rubber reinforcement and also to automobile tires having carcasses or belts formed of such cords.

Steel wires find wide application as reinforcing materials to automotive tires, industrial belts and other rubber products. These wires are generally formed of high-carbon steel strands drawn to a diameter of about 0.15 to 0.04 mm and twisted together depending upon the size and number of strands and the pitch of twists. The steel cord excels in flexural rigidity and shear stress as compared to non-metallic fibers made for example from carbon, aramid and fully aromatic polyester, providing tires and belts of improved resistance to severe flexure and compression deflection. However, because of its great specific gravity, the cord makes the resulting rubber product too heavy in weight. This leaves the problem that the trend of speedup and energy saving will be difficult to achieve with such metallic cord.

In Japanese Patent Laid-Open Publication No. 58-194604, a composite cord is disclosed which is made up of three to five steel wires peripherally disposed over a polyamide or polyester monofilamentary core so as to securely knot the wires by the buffer action of the core. This prior cord is too mechanicaly weak to warrant rubber reinforcement as the plastic monofilaments are far behind steel wires in tensile strength and tensile modulus.

Another composite cord taught by Japanese Patent Laid-Open Publication No. 60-124506 is composed of a double-twisted, carbon fiber-filled, stranded core and steel wires supported thereon. This cord compensates for fretting between the wires with use of fibrous carbon acting as a graphite lubricant. Such known structure is less abundant in carbon and hence highly susceptible to concentrated stress and hence reduced durability; that is, the carbon core is locally deformable due to the steel strands being irregular or uneven.

DE-A-3 410 703 discloses a reinforcing cable made of at least two components, with a first component comprising steel wires and a second component comprising fibres of aromatic polyamides. The fibers of aromatic polyamide are disposed in a core, and the steel wires are arranged around the core.

DE-A-2 729 172 discloses a cable having at least one strand with a core and a covering, characterised in that the covering is formed by a plurality of continuous wire-like metal parts placed around the core, that the core is formed by a bundle of low-elongation, lightweight synthetic fibres, such as aromatic polyamide fibres, which serve as a reinforcing part for the covering.

However, neither DE-A-3 410 703 nor DE-A-2 729 172 disclose a composite cable in which the fibers forming the core have been resin impregnated. It is advantageous for the core to be resin impregnated, since this prevents fibrillation of the core due to frictional contact between the core and the steel wires surrounding the core.

Organic fibers such as from rayon, nylon, polyester, aramid and the like have been used to reinforce the carcass and belt portions of radial tires for passenger cars. The fibrous cord when applied to the tire carcass tends to lead to intense heat generation arising out of repeated elongation and compression of the tire while in running and also to large modulus change with temperature. This in turn invites objectionable dimensional change and inadequate durability, failing to ensure safe running at high speed. Such cord further involves, because of its low resistance to flexture, insufficient casing rigidity and thus unacceptable cornering.

A certain steel cord has become predominant as a tire belting material from the safety driving point of view. This cord is superior in flexure rigidity and tensile modulus to a non-metallic, fibrous cord, and therefore, is capable of rendering the finished tire highly durable and resistant to abrasion, rolling, flexure and to shear deflection. The steel belt however is susceptible to rusting on contact with water entering at from a cut on the tire. This problem has been resolved by assembling steel wires in twisted form for easy penetration of tire rubber material. Another but yet serious problem is that the steel cord makes the tire too heavy in weight, as stated hereinabove, with the result that the belt frequently gets displaced under centrifugal force while in tire running at a ultrahigh speed of about 300 km/hr.

A fibrous cord of carbon, though small in specific gravity, is undesirable for a tire belt as it is inadequate in flexure rigidity associated with the cornering quality of the tire. A cord of aramid or fully aromatic polyester fibers is not wholly satisfactory with respect to flexure rigidity and compression deflection.

As a result of the advent of highly sophisticated automobiles, there has arose a keen demand for an improved cord of reinforcement which enables radial tires to be durable against ultrahigh speed running.

It is therefore the primary object of the present invention to provide an improved composite cord for use in rubber reinforcement which exhibits enhanced shear strength by the use of steel wires combined with a selected class of non-metallic, mechanically strong fibers and increased weight saving.

Another object of the invention is to provide a radial tire for use with passenger cars having belts or carcasses formed of such cord which is highly durable, safe to run at ultrahigh speed, comfort to ride on and long in service life.

The composite cord contemplated under the invention may also be applied to aircrafts, industrial belts and various other rubber products, thus opening up a new market area for rubber products.

The above and related objects and advantages of the invention will be better understood from the following description taken in connection with the accompanying drawings in which certain preferred embodiments are shown for illustrative purposes.

According to one aspect of the invention, there is provided a composite cord for rubber reinforcement which comprises a core member formed of non-metallic, mechanically strong fibers, and a plurality of steel wires laminated thereover, the fibers having a specific gravity of not more than 3.0, a tensile modulus of 5,500 2 to 31,000 kgf/mm and an elongation at break of 1.2 to 4.2%, and the steel wires having a volume fraction of 0.25 to 0. 72 based on the total cord volume, characterised in that said non-metallic fibers are fibers formed from fully aromatic polyester, highly elastic vinylon, polyacrylonitrile, carbon, silicon carbide or alumina, and in that said non-metallic fibers are resin impregnated fibers.

According to another aspect of the invention, there is provided a radial tire for passenger cars which comprises a tire body, a carcass built therein and at least one belt ply made of a composite cord and disposed peripherally over the carcass, the cord comprising a core member formed of non-metallic, mechanically strong resin-impregnated fibers, said fibers being formed from fully aromatic polyester, highly elastic vinylon, polyacrylonitrile, carbon, silicon carbide or alumina, and a plurality of steel wires brass-plated and laminated thereover, the non-metallic fibers having a specific gravity of not more than 3.0, a tensile modulus of 7,000 to 31,000 kgf/mm$^2$ and an elongation at break of 1.2 to 4. 2%, and the steel wires having a volume fraction of 0. 25 to 0. 72 based on the total cord volume.

According to still another aspect of the invention, there is provided a radial tire for passenger cars, which comprises a tire body and at least one carcass ply built therein and made of a composite cord, the cord comprising a core member formed of non-metallic, mechanically strong resin impregnated fibers, said fibers being formed from fully aromatic polyester, highly elastic vinylon, polyacrylonitrile, carbon, silicon carbide or alumina, and a plurality of steel wires brass-plated and laminated thereover, the non-metallic fibers having a specific gravity of not more than 3.0, a tensile modulus of greater than 5,500 kgf/mm$^2$, an elongation at break of 1.2 to 4.2% and a twist pitch of 5 to 20/10 cm, and the steel wires having a diameter of 0.10 to 0.20 mm, a tensile strength of 280 to 350 kgf/mm$^2$, a strand number of 6 to 21 and a volume fraction of 0.25 to 0.72 based on the total cord volume.

Figure 1 is a schematic cross-sectional view of the composite cord embodying the present invention;

Figure 2 is a graphic representation showing the stress-strain curve of the cord according to the invention and of a comparative cord;

Figures 3 and 4 are schematic cross-sectional views of the composite cord to be applied to a tire belt and of various types of belt assemblies; and

Figures 5 and 6 are views similar to Figures 3 and 4, but showing the composite cord to be used in a tire carcass and of various types of belt assemblies.

A composite cord according to the present invention is essentially comprised of a core member formed of non-metallic, resin impregnated mechanically strong and elastic fibers, and a plurality of steel wires laminated thereover.

Steel wires useful for the purpose of the invention are wires capable of exhibiting high strength both in an axial direction and in a direction perpendicular to the plane of the wires, this quality resulting from axial orientation of triiron monocarbide between the wires and also from metal bonding at the ferrite phase. The metallic wires are by far stronger against severe flexure and compression deflection than non-metallic fibers.

Suitable cores used herein are formed of non-metallic, mechanically strong and elastic fibers. The specific gravity of the fibers should be not more than 3.0, and greater gravities would not be effective in reducing the weight of the finished rubber product while maintaining the superior mechanical characteristics of the steel wires. The fibers should have a tensile modulus of 5,500 to 31,000 kgf/mm$^2$, and an elongation at break of 1.2 to 4.2%, preferably 1.7 to 3.0%. The fibers if smaller moduli than 5,500 kgf/mm$^2$ would fail to take advantage of high rigidity peculiar to the steel wires and if larger moduli than 31,000 kg/mm$^2$ would lead to insufficient ductility and hence fast breakage on flexure. Smaller elongations than 1.2% would render the core breakable first when deflecting the cord, while greater elongations than 4.2% would conversely result in broken steel wire. The above specified ranges of tensile modulus and elongation at break should be observed to hold minimum the deviation between the fibrous core and the steel cord in the stress-strain characteristic.

3

Typical examples of the non-metallic fibers include fibers from polyacrylonitrile, aramid, fully aromatic polyester, carbon, silicon carbide, alumina and the like. Preferably, these fibers are impregnated with a suitable resin to prevent fibrillation.

The volume fraction of the steel wires to be occupied in the cord should be in the range of 0.25 to 0.72, preferably 0.30 to 0.64. The steel wires if smaller volume fractions than 0.25 would require for excessive steel wires to be disposed over the core, entailing cost burdens. The smaller dimension the steel strand, the more difficult cord fabrication. Greater volume fractions than 0.72 would give a heavy-weight core.

To further improve tensile strength and tensile modulus, the non-metallic fibers may be twisted at a pitch of 5 to 20/10 cm. It is also preferred that the tensile strength be greater than 150 kgf/mm$^2$ in the fibers and from 280 to 350 kgf/mm$^2$ in the wires.

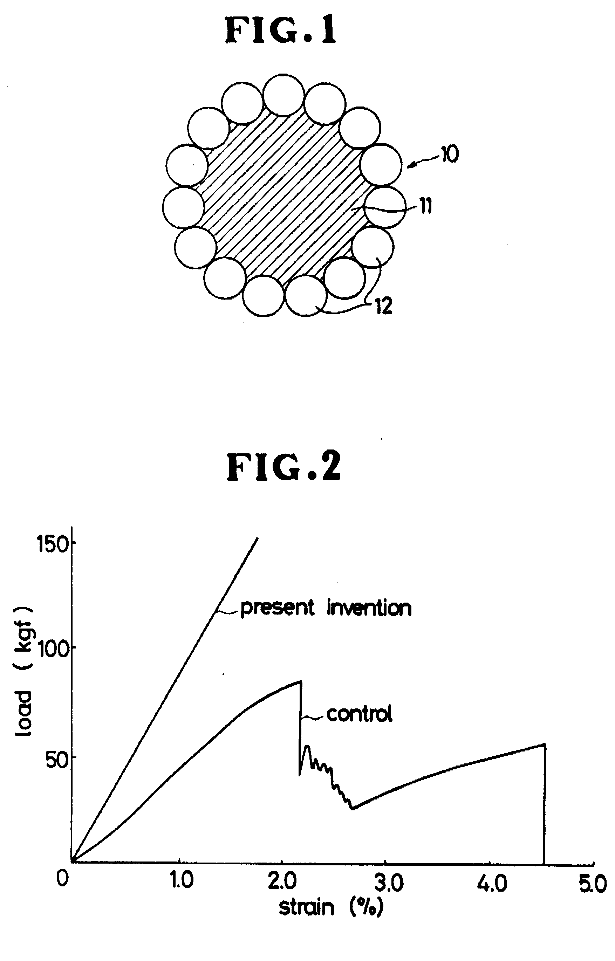

Figure 1 shows a composite cord 10 constructed in accordance with the invention and comprising a core member 11 formed of non-metallic fibers, and brass-plated steel wires 12 disposed on the core 11 in a single peripheral layer. The wires 12 may have a diameter of 0.10 to 0.4 mm and a strand number of 5 to 30, preferably 8 to 27. The cord 10 is preferably in a substantially circular shape but is not necessarily spherical. Wrapping wires may be disposed on the cord to thereby protect the latter against distortion.

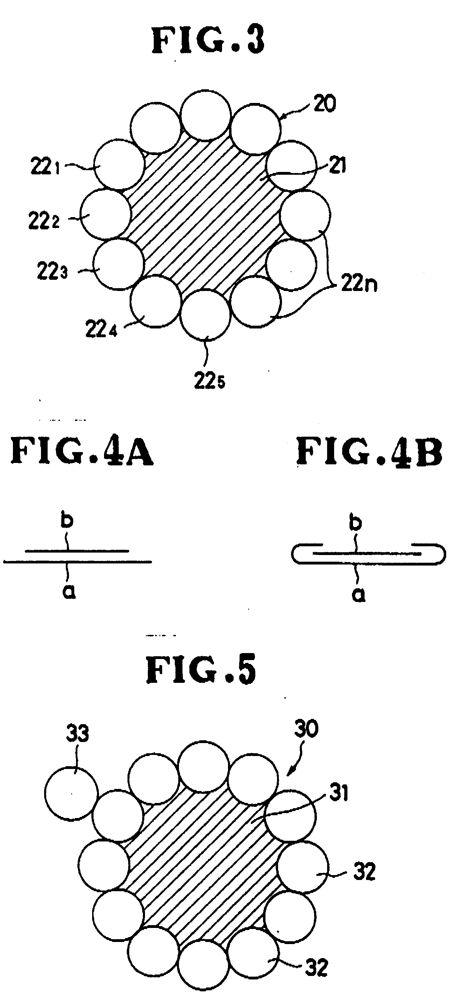

A composite cord, provided in accordance with the invention and shown at 20 in Figure 3, is for use in radial tire belts. The cord 20 comprises a core member 21 formed by non-metallic, mechanically strong fibers, and a plurality of steel wires $22_{1-n}$ brass-plated and laminated over the core 21.

The fibers should have a specific gravity of not more than 3.0, a tensile modulus of 7,000 to 31,000 kgf/mm$^2$ and an elongation at break of 1.2 to 4.2%. The volume fraction of the wires should be in the range of 0.25 to 0.72 based on the total cord volume. Departures from these ranges should be avoided to preclude quality deterioration as above noted.

Eligible non-metallic fibers used herein include for example organic fibers formed from aramid, fully aromatic polyester (polyalylester) and the like, and inorganic fibers made from carbon, silicon carbide, alumina and the like. Particularly preferred aramid and carbon fibers for their superior tensile strength, high tensile modulus and small specific gravity. Preferably, these fibers are impregnated with a suitable resin or coated with a suitable adhesive.

The tire belt thus constructed is substantially comparable in tensile modulus and strength at rupture to, but extremely smaller in specific gravity and greater in flexure rigidity than the prior belt formed solely by steel wires. Such physical characteristics can exhibit sufficient durability at high speed, acceptable running stability, high abrasion resistance and adequate rolling resistance without involving objectionable displacement of the belt during ultrahigh speed running, thus contributing to enhanced cornering, high speed durability and riding comfort characteristics.

A composite cord 30 according to the invention, as seen in Figure 5, is useful for radial tire carcasses. The cord 30 comprises a core member 31 and steel wires 32 disposed thereon. The structure of the core 31 is such that a plurality of steel wires of relatively high resistance to compression deflection are arranged to surround non-metallic core-forming fibers which are relatively light-weight, highly elastic and flexible but sensible for fibrillation under compressive force. Such fibers are obtainable for instance by twisting highly elastic, resin-impregnated aramid fibers of 1,420 in denier at a pitch of 10/10 cm, followed by heat setting to structural elongation. Laminated in a single layer over the fibrous core 31 may be twelve steel wires 32 plated with brass containing 65% by weight of copper. The wires 32 are for example 330 kgf/mm$^2$ in tensile strength and 0.12 mm in diameter. Wrapping wires 33 of 0.12 mm in diameter may be disposed, where desired, on the wires 32 to protect the cord from distorsion.

Non-metallic fibers eligible for the carcass cord should have a specific gravity of not less than 5,500 kgf/mm$^2$, an elongation at break of 1.2 to 4.2% and a twist number of 5 to 20/10 cm.

The fibers if larger specific gravities than 3.0 would make the resulting cord and hence the tire too heavy in weight and if smaller moduli than 5,500 kgf/mm$^2$ would invite a cord of extremely small modulus, failing to give acceptable dimensional stability of the tire while in high speed running. A carcass cord of insufficient tensile modulus is not capable of arresting external stress at its core member and thus is susceptable to concentrated stress on the peripheral steel wires. This literally causes fast fatigue of the wires, leading to a mechanically weak carcass and hence an undurable tire. Smaller elongations than 1.2% would result in broken core on flexure, while greater than 4.2% would render the steel wires readily breakable.

To improve flexure resistance, the fibers should preferably be twisted at a pitch of 5 to 20/10 cm. Smaller pitches would not be effective in improving this resistance, and larger pitches would induce insufficient tensile strength and inadequate tensile modulus. In addition to the foregoing quality requirements, the tensile strength of the fibers preferably exceeds 150 kgf/mm$^2$. Smaller strengths would lead to a carcass cord of reduced strength, making the finished casing inoperable as a tire.

4

Specific examples of the non-metallic fibers include fibers formed from aramid, fully aromatic polyester, carbon, highly elastic vinylon and the like.

In the case of the carcass cord, the fibers are preferably impregnated with a suitable resin to thereby prevent against fibrillation on frictional contact with the steel wires. The fibers may conveniently be heat-treated under tension at moderate temperature prior to lamination with the wires. Heat treatment may be effected after resin impregnation. Temperatures are usually from 60 to 250°C but in an extent to dry and harden the resin, and tensions are preferably greater than 0.1 g/d. Smaller tensions would fail to inhibit structural elongation due to the fibers twisted, resulting in reduced tensile modulus. Too small tensions would induce inadequate bundling and hence ready penetration of water at from end of the bundle, leading to corrosion of the peripheral wires and to eventual separation from the tire rubber.

The steel wires useful in the carcass cord should have a diameter of 0.10 to 0.20 mm, a tensile strength of 280 to 350 kgf/mm$^2$ and a-strand number of 6 to 21. To attain firm bonding with the tire rubber, the wires are plated with brass containing 60 to 70% by weight of copper. Each steel strand has a tensile modulus of 280 to 350 kgf/mm$^2$ so as to produce sufficient carcass strength. The strand is 0.10 to 0.20 mm in diameter as the carcass cord is necessarily flexible against repeated elongation and compression. The steel wires are preferably disposed on the core in a close layer so that the fibers are protected from protruding outwardly of the wires and thus becoming broken on compression between the wires. To meet this arrangement, the strand number of the wires is between 6 and 21.

The steel wires should have a volume fraction of 0.25 to 0.72 based on the total cord volume. Departures from this range would make the resulting casing less rigid and difficult to attain sufficient cornering power.

The following examples are given to further illustrate the invention.

Examples 1 - 5 and Comparative Examples 1 - 3

Different composite cords were formulated and prepared, as shown in Table 1, with use of non-metallic, mechanically strong fibers of denier (d), specific gravity, tensile modulus (kgf/mm$^2$), strength at rupture (kgf) and elongation at break (%), and of steel wires of strand diameter (mm), strand number, volume fraction (%) and tensile modulus (kgf/mm$^2$).

One and the same rubber composition was used in all the test cords, the formulation being indicated below.

natural rubber 100 phr
carbon black (HAF) 50
zinc oxide 8.0
aromatic oil 4.0
sulfur 6.0
cobalt naphthenate 2.0
accelerator (OBS) 0.8

In Example 1 a cord was used which had a core resin-impregnated and twisted at a pitch 14 mm. To improve stability of the cord against distorsion, lapping wires were disposed on the steel wires in Example 3.

The test cords were examined for strength at rupture (kgf). elongation at break (%), strength utilization (%) and weight ratio (%) of composite cord to steel cord, both cords having the same strength, with the results given also in Table 1. In the stress-strain curves shown in Figure 2, the legend present invention was equivalent to Example 1 and control to Comparative Example 1.

Strength at rupture was determined by the maximum value in the case where multi-stage rupture took place (Comparative Examples 1 and 2). Elongation at break was the elongation at the time all the fibers were severed.

As is clear from Table 1, the cords according to the invention are satisfactory in respect of all the qualities tested.

The cord of Comparative Example 1 revealed a two-stage rupture in which the steel wires ruptured first and then the aramid fibers as seen from Figure 2. The strength of the cord was unacceptable as low as 85 kgf contrasted to 150 kgf of Example 1. This was taken to mean that the control was not of a composite structure.

The cords of Examples 2 to 5 have been proved fully correlative with the stress-strain curve of Example 1. A control, Comparative Example 2, showed a curve similar to Comparative Example 1.

A control in which 1 x 4 x 0.15 steel wires were employed, Comparative Example 3, was too large in volume fraction and also in weight ratio and hence was less effective for weight saving.

Examples 6 - 8 and Comparative Examples 4 - 5

Different tires of 165-SR-13 were prepared using the belt cords shown in Table 2-1 and the belt assembly represented in Figure 4A in which a first belt (a) and a second belt (b) were disposed flat.

A standard tire of two steel belt plies was used as a control in Comparative Example 4.

Cornering power, high speed durability and riding comfort were examined under the conditions given below and with the results shown in Table 2-1.

Cornering Power

Measurement was made with air pressure: 2.00 kgf/cm$^2$, load: 350 kgf, slip angle: 1° and speed: 10 km/hr on a passenger car. Cornering was adjudged by taking the standard tire as an index of 100.

High Speed Durability

JIS D-4230 was followed. The running distance required for the tire to rupture was measured and compared taking the standard tire as 100.

Riding Comfort

This quality was evaluated by a board of panel taking the standard tire as 100.

The cord embodying the invention, Example 6, is about 10 kg higher in strength per cord than the cord of Comparative Example 4; that is, the weight of the inventive cord corresponds to about 56% of the control cord, leading to notable weight economy. Cornering power and riding comfort were also acceptable.

The aramid-core cord of Example 7 is significantly economical of weight compared to Comparative Example 4, coupled with superior durability and riding qualities. Cornering is adequate for all practical purposes. Example 8 using a fully aromatic polyester-core cord is acceptable as are in Examples 6 and 7.

The belt cord of Comparative Example 5 showed 1,300 kgf/mm$^2$ in modulus and 42 kgf in cord strength. This reduced strength was attributed to a two-stage rupture between the wires and the fibers. The control cord, though adequate in riding comfort, was unacceptable in cornering and modulus with the result that running stability and high speed durability were not attainable.

Examples 9 - 11 and Comparative Examples 6 - 8

Different tires of 195/70-HR were prepared using the belt cords given in Table 2-2, and the belt assembly shown in Figure 4B and composed of a second flat blet (b) and a first belt (a) with its ends toward the second belt. Performance test was made in a manner similar to Examples 6 to 8 with the results shown in Table 2-2.

Comparative Example 6 was a standard tire having two belt plies, a first belt being formed of an aramid cord of 6,300 kgf/mm$^2$ in modulus, 45 kg in strength at rupture and 4.5% in elongation at break, and a second belt being formed of a steel cord of 20,000 kgf/mm$^2$, 96 kgf and 2.4% in the same properties.

In Example 9, the tire used as a second belt 12 brass-plated steel wires of 0.12 mm in diameter, a first belt (in Figure 4B) being similar to Comparative Example 6. This tire excels in high speed durability and riding comfort.

A highly elastic aramid-steel cord and a carbon-steel cord were used in Example 10. The resulting tire shows superior cornering and durability qualities. Riding comfort and durability are greatly improved in Example 11 in which a fully aromatic polyester/brass-plated steel cord was disposed as a second belt.

Comparative Example 7 showed a sharp decline in cornering and riding comfort as the composite cord involved insufficient modulus and elongation. Comparative Example 8 was ineffective in improving durability at high speed.

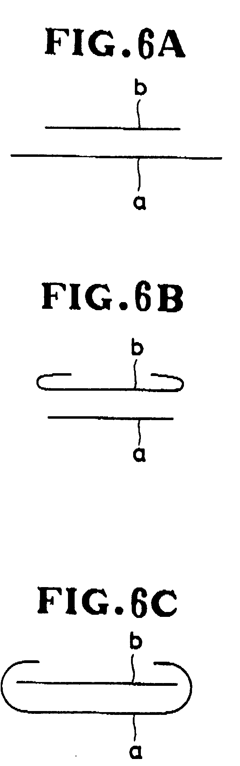

Various tires of 195/70 HR14 were prepared using the carcass cords shown in Table 3 and the belt assemblies shown in Figures 6A to 6C. In one such assembly, a first belt (a) and a second belt (b) were both flat (Figure 6A). Another assembly employed a first flat belt and a second belt with its both ends outwardly folded (Figure 6B), and a still another assembly was composed of a second flat belt and a first belt with its both ends folded toward the second belt.

Tire No. 1 was a standard tire for Tire Nos. 2 to 8, Tire No. 9 for Tires Nos. 10 to 11 and Tire No. 13 for Tires Nos. 14 to 16, respectively.

Cornering power and high speed durability were examined with the results given in Table 3. The test conditions of the previous examples were followed.

Tire Nos. 2 to 5 were the tires embodying the invention and using highly elastic aramid/steel, aramid/steel, fully aromatic polyester/steel and carbon/steel as the carcass plies. The non-metallic fibers were resin-impregnated and heat-set to prevent initial modulus from reduction. The resin used was what was called RFL, a mixture of resorcin/formalin precondensate/rubber latex. Heat setting was conducted at 150°C and at 1.0 g/d tension. Tire Nos. 2 to 5 excel in cornering and durability.

Tire No. 6 using a polyester core failed to allow the core and steel to fully exhibit their respective strength. This was because polyester was extremely smaller in modulus and larger in elongation than steel so that steel was breakable earlier than polyester. Tire No. 6, given higher cornering than and comparable to the standard tire, showed no appreciable rise in strength retention.

Tire No. 7, because highly elastic aramid of larger diameter and less number were used, was susceptible to too great volume fraction and hence too heavy-weight tire. Too high flexture rigidity adversely affected riding comfort. Tire No. 8 devoid of twisting of the fibers showed a decline in strength retention, entailing reduced durability.

Tire Nos. 9 to 12 was different in belt assembly from Tire Nos. 1 to 8. The qualities tested were adjudged by taking Tire No. 9 as an index of 100.

Tire No. 10, previded with a highly elastic aramid/steel cord according to the invention, has proved effective in improving cornering and durability. Similar improved results are obtainable in Tire No. 11 employing a fully aromatic polyester/steel cord.

Tire No. 12, a control tire, involved similar problems and similar results as was in Tire No. 6.

Tire Nos.13 to 16 differed in belt assembly from Tire Nos. 1 to 8 and also from Tire Nos. 9 to 12. Evaluation was made by taking Tire No. 13 as a standard tire.

Tire Nos 14 and 15 embodying the invention are both satisfactory in respect of cornering and durability.

Tire No. 16 was substantially comparable in cornering and durability to, but smaller in strength retention than the standard tire.

Table 1

| Cord | Examples | | | | | Comparative Examples | | |
|---|---|---|---|---|---|---|---|---|
| | 1 | 2 | 3 | 4 | 5 | 1 | 2 | 3 |
| **Core** | | | | | | | | |
| fiber | carbon | carbon | carbon | aramid | fully artomatic PET | aramid | polyester | carbon |
| denier | 3,600d | 3,600d | 3,600d | 3,000d | 3,000d | 1,500d/2 | 3,000d | 1,800d |
| tensile modulus | 24,000 | 24,000 | 24,000 | 13,000 | 13,500 | 5,300 | 1,300 | 24,000 |
| specific gravity | 1.75 | 1.75 | 1.75 | 1.45 | 1.40 | 1.44 | 1.38 | 1.75 |
| stress at rupture | 79 | 79 | 79 | 66 | 69 | 59 | 28 | 40 |
| elongation at break | 1.8 | 1.8 | 1.8 | 1.8 | 2.5 | 4.5 | 10.5 | 1.8 |
| **Wire** | | | | | | | | |
| strand diameter | 0.15 | 0.20 | 0.15 | 0.15 | 0.15 | 0.15 | 0.15 | 0.15 |
| strand number | 15 | 12 | 15 + lap wire | 15 | 15 | 15 | 15 | 6 x (1 x 4) |
| volume fraction | 48 | 56 | 50 | 48 | 48 | 48 | 48 | 82 |
| stress at rupture | 76 | 109 | 76 | 76 | 76 | 76 | 76 | 123 |
| tensile modulus | 20,000 | 20,000 | 20,000 | 20,000 | 20,000 | 20,000 | 20,000 | 20,000 |
| **Cord properties** | | | | | | | | |
| stress at rupture | 150 | 177 | 148 | 133 | 135 | 85 | 78 | 148 |
| elongation at break | 1.8 | 1.8 | 1.8 | 2.4 | 2.5 | 4.8 | 10.0 | 1.6 |
| utilization | 97 | 94 | 95 | 94 | 93 | 63 | 75 | 91 |
| weight ratio | 64 | 75 | 65 | 63 | 64 | 92 | 98 | 86 |

EP 0 293 263 B1

Table 2-1

| Tire | | Comparative Example 4 | Examples | | | Comparative Example 5 |
|---|---|---|---|---|---|---|
| | | | 6 | 7 | 8 | |
| Belt | | FIG. 4A | FIG. 4A | FIG. 4A | FIG. 4A | FIG. 4A |
| 1st Belt (a) | material | steel | carbon + steel | aramid + steel | fully aromatic polyester + steel | polyester + steel |
| | structure | 1 x 5 (0.25) | 1800 D + 0.12x12 | 1500 D 0.12x12 | 1500 D + 0.12x12 | 1500 D + 0.12x12 |
| | count/50 mm | 40 | 35 | | | |
| 2nd Belt (b) | material | steel | carbon + steel | aramid + steel | fully aromatic polyeste + steel | polyester + steel |
| | structure | 1 x 5(0.25) | 1800 D + 0.12x12 | 1500 D + 0.12x12 | 1500 D + 0.12x12 | 1500 D + 0.12 x 12 |
| | count/50 mm | 40 | 35 | 41 | 40 | 40 |

EP 0 293 263 B1

## Table 2-1 (cont'd)

| | Tire | Comparative Example 4 | Examples | | | Comparative Example 5 |
|---|---|---|---|---|---|---|
| | | | 6 | 7 | 8 | |
| | Belt | FIG. 4A | FIG. 4A | FIG. 4A | FIG. 4A | FIG. 4A |
| Cord | core <br> modulus (kgf/mm$^2$) | – | 24,000 | 13,000 | 20,000 | 1,300 |
| | stress at rupture (kgf) | – | 39.0 | 33.0 | 35.0 | 14 |
| | wire volume fraction | 1.00 | 0.56 | 0.56 | 0.56 | 0.56 |
| | cord <br> stress at rupture (kgf) | 67 | 77 | 65 | 66 | 42 |
| | elongation at break (%) | 2.2 | 1.8 | 2.4 | 2.5 | 10.0 |
| | weight ratio | 100 | 56 | 65 | 64 | 100 |
| Tire | cornering power | 100 | 98 | 110 | 96 | 88 |
| | riding comfort | 100 | 105 | 110 | 105 | 106 |
| | high speed durability | 100 | 105 | 100 | 105 | 90 |

EP 0 293 263 B1

Table 2-2

| Tire | | Comparative Example 6 | Examples | | | Comparative Examples | |
|---|---|---|---|---|---|---|---|
| | | | 9 | 10 | 11 | 7 | 8 |
| Belt | | FIG. 4B | FIG. 4B | FIG. 4B | FIG. 4B | FIG. 4B | FIG. 4B |
| 1st Belt (a) | material | aramid | aramid | aramid (highly elastic) + steel | aramid | aramid | steel |
| | structure | 1500 D/2 | 1500 D/2 | 1500 D + 0.12x12 | 1500 D + 0.12x12 | 1500 D/2 | 3 x 7(0.15) |
| | count/50 mm | 51 | 51 | 51 | 51 | 51 | 32 |
| 2nd Belt (b) | material | steel | carbon + steel | carbon + steel | fully aromatic polyester + steel | polyester + steel | steel |
| | structure | 2 + 7 (0.22)+1 | 1800 D + 0.12x12 | 1800 D + 0.12x12 | 1500 D + 0.12x12 | 1500 D + 0.12 x 12 | 1 x 5(0.25) |
| | count/50 mm | 32 | 40 | 40 | 46 | | 40 |

EP 0 293 263 B1

Table 2-2 (cont'd)

| Tire | | Comparative Example 6 | Examples | | | | Comparative Examples | |
|---|---|---|---|---|---|---|---|---|
| | | | 9 | 10 | | 11 | 7 | 8 |
| Belt | | FIG. 4B | FIG. 4B | FIG. 4B | | FIG. 4B | FIG. 4B | FIG. 4B |
| Cord | core modulus (kgf/mm$^2$) | − | 24,000 | (a) 13,000 | (b) 24,000 | 13,500 | 1,300 | − |
| | stress at rupture (kgf) | − | 39.0 | 33 | 39 | 35 | 14 | − |
| | wire volume fractio | − | 0.56 | 0.56 | 0.56 | 0.56 | 0.56 | − |
| | cord stress at rupture (kgf) | − | 77 | 65 | 77 | 66 | 42 | − |
| | elongation at break (%) | − | 1.8 | 2.4 | 1.8 | 2.5 | 10.0 | − |
| | weight ratio | − | 0.56 | 0.65 | 0.56 | 0.64 | 1.00 | − |
| Tire | cornering power | 100 | 100 | 110 | | 98 | 80 | 110 |
| | riding comfort | 100 | 105 | 110 | | 103 | 85 | 103 |
| | high speed durability | 100 | 110 | 100 | | 115 | 115 | 85 |

Table 3

| Tier No. | 1 | 2 | 3 | 4 | 5 | 6 | 7 | 8 |
|---|---|---|---|---|---|---|---|---|
| Belt | FIG. 6A | FIG. 6A | FIG. 6A | FIG. 6A | FIG. 6A | FIG. 6A | FIG. 6A | FIG. 6A |
| **1st Belt** | | | | | | | | |
| material | steel | steel | steel | steel | steel | steel | steel | steel |
| structure | 1x5(0.25) | 1x5(0.25) | 1x5(0.25) | 1x5(0.25) | 1x5(0.25) | 1x5(0.25) | 1x5(0.25) | 1x5(0.25) |
| count/50 mm | 40 | 40 | 40 | 40 | 40 | 40 | 40 | 40 |
| **2nd Belt** | | | | | | | | |
| material | steel | steel | steel | steel | steel | steel | steel | steel |
| structure | 1x5(0.25) | 1x5(0.25) | 1x5(0.25) | 1x5(0.25) | 1x5(0.25) | 1x5(0.25) | 1x5(0.25) | 1x5(0.25) |
| count/50 mm | 40 | 40 | 40 | 40 | 40 | 40 | 40 | 40 |
| **Carcass** | | | | | | | | |
| material | polyester | highly elastic aramid + steel | aramid + steel | fully aromatic polyester + steel | fully aromatic polyester + steel | polyester + steel | highly elastic aramid + steel | highly elastic aramid + steel |
| structure | 1500d/2 | 1420d/ 1+0.12 x12+W | 1500d/ 1+0.12 x12+W | 1500d/ 1+0.12 x12+W | 1800d/ 1+0.12 x12+W | 1500d/ 1+0.12 x12+W | 570d/ 1+0.20 x6 | 1420d/ 1+0.12 x12+W |
| count/50mm | 54 | 34 | 34 | 34 | 34 | 34 | 34 | 34 |
| **Cord** | | | | | | | | |
| fiber twist (T/100) | | 10 | 5 | 10 | 10 | 10 | 10 | 10 |
| fiber impregnation* | | o | o | o | o | o | o | o |
| core breaking load (kgf) | | 30 | 31 | 29 | 35 | 12 | 11 | 32 |
| core modulus (kgf/mm$^2$) | | 9200 | 6500 | 7000 | 15000 | 1200 | 1100 | 13000 |
| wire strand diameter (mm) | | 0.12 | 0.12 | 0.12 | 0.12 | 0.12 | 0.20 | 0.12 |
| wire tensile strength (kgf/mm$^2$) | | 290 | 290 | 290 | 290 | 290 | 290 | 290 |
| cord breaking load (kgf) | 24 | 64 | 65 | 64 | 68 | 45 | 65 | 65 |
| wire volume fraction | | 0.56 | 0.56 | 0.56 | 0.56 | 0.56 | 0.82 | 0.50 |
| **Tire** | | | | | | | | |
| cornering power | 100 | 120 | 115 | 120 | 125 | 105 | 125 | 120 |
| high speed durability (index) | 100 | 110 | 108 | 110 | 110 | 102 | 110 | 110 |
| strength retention of carcass after runner (%) | 97 | 100 | 100 | 100 | 98 | 93 | 100 | 80 |
| riding comfort (index) | 100 | 95 | 95 | 95 | 95 | 96 | 80 | 95 |
| Class | S | P | p | P | P | C | C | C |

EP 0 293 263 B1

Table 3 (cont'd)

| Tier No. | 9 | 10 | 11 | 12 | 13 | 14 | 15 | 16 |
|---|---|---|---|---|---|---|---|---|
| Belt | FIG. 6B | FIG. 6B | FIG. 6B | FIG. 6B | FIG. 6C | FIG. 6C | FIG. 6C | FIG. 6C |
| 1st Belt material structure | steel 2+7(0.22)+W | steel 2+7(0.22)+W | steel 2+7(0.22)+W | steel 2+7(0.22)+W | aramid 1500d/2 | aramid 1500d/2 | aramid 1500d/2 | aramid 1500d/2 |
| count/50 mm | 32 | 32 | 32 | 32 | 51 | 51 | 51 | 51 |
| 2nd Belt material structure | aramid 1500d/2 | aramid 1500d/2 | aramid 1500d/2 | aramid 1500d/2 | aramid 1500d/2 | aramid 1500d/2 | aramid 1500d/2 | aramid 1500d/2 |
| count/50 mm | 51 | 51 | 51 | 51 | 51 | 51 | 51 | 51 |
| Carcass material | polyester | highly elastic aramid + steel | fully aromatic polyester + steel | nylon + steel | polyester | highly elastic aramid + steel | highly elastic vinylon + steel | nylon + steel |
| structure | 1500d/2 | 1420d/ 1+0.12 x12+W | 1500d/ 1+0.12 x12+W | 1260d/ 1+0.12 x12+W | 1500d/2 | 1420d/ 1+0.12 x12+W | 1500d/ 1+0.20 x6+W | 1260d/ 1+0.12 x12+W |
| count/50mm | 54 | 34 | 34 | 34 | | 34 | 34 | 34 |
| Cord fiber twist (T/100) | | 10 | 10 | 10 | | 10 | 10 | 10 |
| fiber impreguation* | | 0 | 0 | 0 | | 0 | 0 | 0 |
| core breaking load (kgf) | | 30 | 29 | 12 | | 30 | 29 | 12 |
| core modulus (kgf/mm²) | | 9000 | 7000 | 600 | | 9000 | 600 | 600 |
| wire strand diameter (mm) | | 0.12 | 0.12 | 0.12 | | 0.12 | 0.12 | 0.12 |
| wire tensile strength (kgf/mm²) | | 290 | 290 | 290 | | 290 | 290 | 290 |
| cord breaking load (kgf) | 24 | 64 | 64 | 45 | 24 | 64 | 63 | 45 |
| wire volume fraction | | 0.56 | 0.56 | 0.56 | | 0.56 | 0.56 | 0.56 |
| Tire cornering power | 100 | 120 | 120 | 110 | 100 | 120 | 115 | 110 |
| high speed durability (index) | 100 | 110 | 110 | 103 | 100 | 110 | 108 | 103 |
| strength retention of carcass after runner (%) | 96 | 100 | 100 | 93 | 93 | 100 | 97 | 92 |
| riding comfort (index) | 100 | 98 | 98 | 100 | 100 | 98 | 98 | 98 |
| Class | C | S | P | P | C | P | P | C |

*): o – resin impregnated

P : present invention
S : standard tire
C : control tire

## Claims

1. A composite cord for rubber reinforcement which comprises a core member formed of non-metallic, mechanically strong fibers, and a plurality of steel wires laminated thereover, said fibers having a

14

specific gravity of not more than 3.0, a tensile modulus of 5,500 to 31,000 kgf/mm$^2$ and an elongation at break of 1.2 to 4.2%, and said wires having a volume fraction of 0.25 to 0.72 based on the total cord volume, characterised in that said non-metallic fibers are fibers formed from fully aromatic polyester, highly elastic vinylon, polyacrylonitrile, carbon, silicon carbide or alumina, and in that said non-metallic fibers are resin-impregnated fibers.

2. The cord of claim 1 wherein said steel wires are brass-plated wires.

3. The cord of claim 1 wherein said non-metallic fibers have a twist number of 5 to 20/10 cm.

4. The cord of claim 1 wherein said steel wires have a strand number of 5 to 30.

5. The cord of claim 1 wherein said steel wires has a diameter of 0.10 to 0.4 mm.

6. The cord of claim 1 wherein said steel wires have a tensile strength of 280 to 350 kgf/mm$^2$.

7. A radial tire for passenger cars which comprises a tire body, a carcass built therein and at least one belt ply made of a compsite cord and disposed peripherally over said carcass, said cord comprising a core member formed of non-metallic, mechanically strong, resin-impregnated fibers, said fibers being formed from fully aromatic polyester, highly elastic vinylon, polyacrylonitrile, carbon, silicon carbide or alumina, and a plurality of steel wires brass-plated and laminated thereover, said non-metallic fibers having a specific gravity of not more than 3.0, a tensile modulus of 7,000 to 31,000 kgf/mm$^2$ and an elongation at break of 1.2 to 4.2%, and said steel wires having a volume fraction of 0.25 to 0.72 based on total cord volume.

8. A radial tire for passenger cars which comprises a tire body and at least one carcass ply made of a composite cord and built in said body, said cord comprising a core member formed of non-metallic, mechanically strong, resin impregnated fibers, said fibers being formed from fully aromatic polyester, highly elastic vinylon, polyacrylonitrile, carbon, silicon carbide or alumina, and a plurality of steel wires brass-plated and laminated thereover, said non-metallic fibers having a specific gravity of not more than 0.3, a tensile modulus of not less than 5,500 kgf/mm$^2$, an elongation at break of 1.2 to 4.2% and a twist number of 5 to 20/10 cm, said steel wires having a diameter of 0.10 to 0.20 mm, a tensile strength of 280 to 350 kgf/mm$^2$ and a strand number of 6 to 21, and said steel wires having a volume fraction of 0.25 to 0.72 based on the total core volume.

**Revendications**

1. Un câblé composite pour le renforcement de caoutchouc, comportant un élément d'âme formé de fibres non métalliques, mécaniquement résistantes, ainsi qu'une pluralité de fils d'acier laminés au-dessus de ces fibres, lesdites fibres ayant un poids spécifique ne dépassant pas 3,0, un module de traction de 5.500 à 31.000 kgf/mm$^2$ et un allongement à la rupture de 1,2 à 4,2%, lesdits fils correspondant à une fraction de volume comprise entre 0,25 et 0,72 par rapport au volume total du câblé, caractérisé en ce que lesdites fibres non métalliques sont des fibres composées de polyester entièrement aromatique, de vinylon hautement élastique, de polyacrylonitrile, de carbone, de carbure de silicium ou d'oxyde d'aluminium, et en ce que lesdites fibres non métalliques sont des fibres imprégnées de résine.

2. Le câblé selon la revendication 1, dans lequel lesdits fils d'acier sont des fils plaqués de laiton.

3. Le câblé selon la revendication 1, dans lequel lesdites fibres non métalliques ont un nombre de torsions de 5 à 20/10 cm.

4. Le câblé selon la revendication 1, dans lequel lesdits fils d'acier ont un nombre de torons de 5 à 30.

5. Le câblé selon la revendication 1, dans lequel lesdits fils d'acier ont un diamètre de 0,10 à 0,4 mm.

6. Le câblé selon la revendication 1, dans lequel lesdits fils d'acier ont une résistance à la traction de 280 à 350 kgf/mm$^2$.

**7.** Un pneu radial pour voitures de tourisme, comportant un corps de pneu, une carcasse construite dans ce corps et au moins une nappe de ceinture composée d'un câblé composite et agencée périphérique-ment au-dessus de ladite carcasse, ledit câblé comprenant un élément d'âme, composé de fibres non métalliques, mécaniquement résistantes, imprégnées de résine, lesdites fibres étant en polyester entièrement aromatique, en vinylon hautement élastique, en polyacrylonitrile, en carbone, en carbure de silicium ou en oxyde d'aluminium, ainsi qu'une pluralité de fils d'acier plaqués de laiton et laminés au-dessus de ces fibres, lesdites fibres non métalliques ayant un poids spécifique ne dépassant pas 3,0, un module de traction de 7.000 à 31.000 kgf/mm$^2$ et un allongement à la rupture de 1,2 à 4,2%, lesdits fils d'acier correspondant à une fraction de volume comprise entre 0,25 et 0,72 par rapport au volume total du câblé.

**8.** Un pneu radial pour voitures de tourisme, comprenant un corps de pneu et au moins une nappe de ceinture composée d'un câblé composite et construite dans ledit corps, ledit câblé comprenant un élément d'âme formé de fibres non métalliques, mécaniquement résistantes, imprégnées de résine, lesdites fibres étant en polyester entièrement aromatique, en vinylon hautement élastique, en polyacrylonitrile, en carbone, en carbure de silicium ou en oxyde d'aluminium, ainsi qu'une pluralité de fils d'acier plaqués de laiton et laminés au-dessus de ces fibres, lesdites fibres non métalliques ayant un poids spécifique ne dépassant pas 0,3, un module de traction non inférieur à 5.500 kgf/mm$^2$, un allongement à la rupture de 1,2 à 4,2% et un nombre de torsions de 5 à 20/10 cm, lesdits fils d'acier ayant un diamètre de 0,10 à 0,20 mm, une résistance à la traction de 280 à 350 kgf/mm$^2$ et un nombre de torons de 6 à 21, ces fils d'acier correspondant à une fraction de volume comprise entre 0,25 et 0,72 par rapport au volume total du câblé.

**Patentansprüche**

**1.** Reifenverstärkungs-Verbundkord, der umfaßt ein Kernelement aus nicht-metallischen, mechanisch festen Fasern und einer Vielzahl von darüberliegenden Stahldrähten, wobei die Fasern ein spezifisches Gewicht von nicht mehr als 3,0, einen Zugmodul von 53 955 bis 304 110 N/mm$^2$ (5 500-31 000 kgf/mm$^2$) und eine Dehnung beim Bruch von 1,2 bis 4,2 % haben und die Drähte einen Volumenanteil von 0,25 bis 0,72, bezogen auf das Gesamtkordvolumen, haben,
dadurch gekennzeichnet, daß die nicht-metallischen Fasern Fasern aus einem vollständig aromatischen Polyester, hochelastischem Vinylon, Polyacrylnitril, Kohlenstoff, Siliciumcarbid oder Aluminiumoxid sind und die nicht-metallischen Fasern Harz-imprägnierte Fasern sind.

**2.** Kord nach Anspruch 1, in dem die Stahldrähte Messingplattierte Drähte sind.

**3.** Kord nach Anspruch 1, in dem die nicht-metallischen Fasern eine Twist-Zahl von 5 bis 20/10 cm haben.

**4.** Kord nach Anspruch 1, in dem die Stahldrähte eine Verseilungs-Zahl von 5 bis 30 haben.

**5.** Kord nach Anspruch 1, in dem die Stahldrähte einen Durchmesser von 0,10 bis 0,4 mm haben.

**6.** Kord nach Anspruch 1, in dem die Stahldrähte eine Zugfestigkeit von 2747 bis 3434 N/mm$^2$ (280-350 kgf/mm$^2$) haben.

**7.** Radialreifen für Personenkraftfahrzeuge, der umfaßt einen Reifenkörper, eine eingebaute Karkasse und mindestens eine Gürtellage aus einem Verbund-Kord, die peripher über der Karkasse angeordnet ist, wobei der Kord umfaßt ein Kernelement aus nicht-metallischen, mechanisch festen, Harz-imprägnierten Fasern aus einem vollständig aromatischen Polyester, hochelastischem Vinylon, Polyacrylnitril, Kohlenstoff, Siliciumcarbid oder Aluminiumoxid und eine Vielzahl von darüberliegenden Messing-plattierten Stahldrähten, wobei die nicht-metallischen Fasern ein spezifisches Gewicht von nicht mehr als 3,0, einen Zugmodul von 68 670 bis 304 110 N/mm$^2$ (7000-31 000 kgf/mm$^2$) und eine Dehnung beim Bruch von 1,2 bis 4,2 % haben und die Stahldrähte einen Volumenanteil von 0,25 bis 0,72, bezogen auf das Gesamtkordvolumen, aufweisen.

**8.** Radialreifen für Personenkraftfahrzeuge, der umfaßt einen Reifenkörper und mindestens einen in den Körper eingebauten Karkassengürtel aus einem Verbund-Kord, der umfaßt ein Kernelement aus nicht-metallischen, mechanisch festen, Karz-imprägnierten Fasern aus einem vollständig aromatischen Polyester, hochelastischem Vinylon, Polyacrylnitril, Kohlenstoff, Siliciumcarbid oder Aluminiumoxid und eine Vielzahl von darüberliegenden Messing-plattierten Stahldrähten, wobei die nicht-metallischen Fasern ein spezifisches Gewicht von nicht mehr als 0,3, einen Zugmodul von weniger als 53 955 N/mm$^2$ (5500 kgf/mm$^2$), eine Dehnung beim Bruch von 1,2 bis 4,2 % und eine Twist-Zahl von 5 bis 20/10 cm haben, die Stahldrähte einen Durchmesser von 0,10 bis 0,20 mm, eine Zugfestigkeit von 2747 bis 3434 N/mm$^2$ (280-350 kgf/mm$^2$) und eine Verseilungs-Zahl von 6 bis 21 haben und die Stahldrähte einen Volumenanteil von 0,25 bis 0,72, bezogen auf das Gesamtkordvolumen, aufweisen.

# FIG.1

# FIG.2

# FIG.3

# FIG.4A

# FIG.4B

# FIG.5

# FIG.6A

b

a

# FIG.6B

b

a

# FIG.6C

b

a